# EUROPEAN PATENT SPECIFICATION

(11) **EP 2 848 020 B1**
(45) Date of publication and mention of the grant of the patent: **15.03.2017**
(21) Application number: 13731906.7
(22) Date of filing: 10.05.2013
(51) Int. Cl.: H04W 8/24, H04W 36/00, H04W 36/14

(54) **CAPABILITY REPORTING IN ADVANCE OF AN INTERSYSTEM HANDOVER**
FÄHIGKEITENMELDUNG IM VORFELD EINER ÜBERGABE ZWISCHEN SYSTEMEN
RAPPORT DE CAPACITÉ PRÉALABLEMENT À UN TRANSFERT INTERCELLULAIRE ENTRE SYSTÈMES

(30) Priority: 11.05.2012 GB 201208321
(43) Date of publication of application: 18.03.2015
(73) Proprietor: Broadcom Corporation, Irvine, CA 92617 (US)
(72) Inventor: MARTIN, Brian, Farnham Surrey G09 0LY (GB); KUBOTA, Keiichi, Weybridge Surrey KT13 8LP (GB)
(74) Representative: Bosch Jehle Patentanwaltsgesellschaft mbH
(86) International application number: PCT/IB2013/053807
(87) International publication number: WO 2013/168138

(56) References cited:
- EP-A1- 2 031 921
- EP-A2- 2 182 758
- QUALCOMM INCORPORATED: "UE capability for FDD and TDD", 3GPP DRAFT; R2-111868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20110411, 4 April 2011 (2011-04-04), XP050494313, [retrieved on 2011-04-04]
- 3GPP: "3GPP TS 25.331 V10.7.0; 3rd Generation Partnership Project; Technical Specification Group Radio Access Network; Radio Resource Control (RRC); Protocol specification (Release 10)", 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 March 2012 (2012-03-16), pages 156-158, XP050601453, [retrieved on 2012-03-16]
- "LTE; Evolved Universal Terrestrial Radio Access (E-UTRA) and Evolved Universal Terrestrial Radio Access Network (E-UTRAN); Overall description; Stage 2 (3GPP TS 36.300 version 10.7.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V10.7.0, 1 March 2012 (2012-03-01), XP014070079,
- RENESAS MOBILE EUROPE LTD ET AL: "TDD or FDD capability in INTER RAT HANDOVER INFO", 3GPP DRAFT; R2-125681 UTRAN TDD OR FDD IN IRHOI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. New Orleans, USA; 20121112 - 20121116 2 November 2012 (2012-11-02), XP050667288, Retrieved from the Internet: URL:http://www.3gpp.org/ftp/tsg_ran/WG2_RL 2/TSGR2_80/Docs/ [retrieved on 2012-11-02]

## Description

### Technical Field

The present disclosure relates to the provision of capability reporting. In particular, but not exclusively, a method, apparatus, computer software and computer program product are provided for identifying and then reporting one of a plurality of capability groups based upon one or more predefined criteria.

### Background

Some mobile terminals are now configured to have both frequency division duplex (FDD) and time division duplex (TDD) capabilities. As such, in advance of an intersystem handover, an access point of the network currently servicing the mobile terminal may transmit an inquiry to the mobile terminal requesting the mobile terminal to identify which of the FDD or TDD capabilities will be utilized following the handover. For example, in advance of a handover from a long-term evolution (LTE) network to a UMTS network, an evolved Node B (eNB) of the LTE network may issue an inquiry of the mobile terminal regarding which of its FDD and TDD capabilities will be utilized in the UMTS network, since a UMTS network may support both FDD and TDD capabilities. Based upon the response from the mobile terminal, the access point of the network currently servicing the mobile terminal may advise the destination network of the FDD or TDD capability of the mobile terminal that will be utilized following the handover.

Even though some mobile terminals may now have both FDD and TDD capabilities, a mobile terminal cannot simultaneously report both its FDD and TDD capabilities to a LTE network. In this regard, the radio resource control (RRC) interface defines the inter-radio access technology (RAT) handover information message for reporting an FDD capability and for reporting a TDD capability on separate branches. As such, the mobile terminal must select one of the capabilities, such as either an FDD capability or a TDD capability, and then report the respective capability even if the mobile terminal is configured to support both FDD and TDD capabilities following the handover. Depending upon the manner in which the mobile terminal selects one of the capabilities for reporting to the access point, the capability that is reported may be mismatched or otherwise less efficient for the destination network relative to the other capability that is supported by the mobile terminal, but that was not selected.

European patent application no. EP-A-2182758 describes a method of handling an inter-RAT handover for a mobile device in a wireless communication system includes when, via a handover from a serving network using a first RAT to a target network using a second RAT, the mobile device succeeds in establishing a connection to the target network and has packet switched data for transmission, transmitting a predetermined radio resource control message, indicating existence of a packet switched signaling connection of the mobile device, to the target network.

3GPP WG2 discussion document R2-111868 by Qualcomm Inc, entitled "UE capability for FDD and TDD" describes that operators are starting their deployment with a single mode (either FDD or TDD) LTE operation. With operator specific requirements for network and user equipment implementations, the authors consider it possible that a FDD/TDD dual mode UE will be supported. The authors indicate that it is unclear under the current specifications what radio access capabilities such dual mode user equipment should signal to the network.

### Summary

A method, apparatus, computer software and computer program product are provided according to embodiments of the present disclosure in order to identify one of a plurality of capability groups, such as one of an FDD capability or a TDD capability, that will be utilized following a handover and to then cause the capability information to be provided with the capability information including the capability group that has been identified. As such, the method, apparatus, computer software and computer program product of embodiments facilitate an intersystem handover such as a handover between systems that utilize different radio access technologies by providing a reliable indication of the capability group, such as the FDD or TDD capability, that is to be utilized following the handover.

In accordance with a first aspect of the present disclosure, there is provided a method of providing mobile terminal capability reporting, the method including, at a mobile terminal:
receiving an inquiry message for mobile terminal capability information in advance of a handover from a first network operating in accordance with one type of radio access technology to a second network operating in accordance with a different type of radio access technology, wherein the inquiry message includes an indication as to one of a plurality of mobile terminal capability groups that is utilized by the second network;
identifying, based upon one or more predefined criteria, one of a plurality of mobile terminal capability groups supported by the mobile terminal to be utilized following the handover to the second network; and
causing the mobile terminal capability information to be provided responsive to the inquiry message including the one of the plurality of capability groups that has been identified,
wherein the indication provided by the inquiry message identifies whether the second network has frequency division duplex, FDD, system coverage or time division duplex, TDD, system coverage, and
wherein the mobile terminal capability information identifies the one of FDD system coverage or TDD system coverage consistent with the indication provided by the inquiry message.

In accordance with a second aspect of the present disclosure, there is provided apparatus for use in providing mobile terminal capability reporting, the apparatus including a processing system adapted to cause the apparatus to at least, at a mobile terminal:
receive an inquiry message for mobile terminal capability information in advance of a handover from a first network operating in accordance with one type of radio access technology to a second network operating in accordance with a different type of radio access technology, wherein the inquiry message includes an indication as to one of a plurality of mobile terminal capability groups that is utilized by the second network;
identify, based upon one or more predefined criteria, one of a plurality of mobile terminal capability groups supported by the mobile terminal to be utilized following the handover to the second network; and
cause the mobile terminal capability information to be provided responsive to the inquiry message including the one of the plurality of capability groups that has been identified,
wherein the indication provided by the inquiry message identifies whether the second network has frequency division duplex, FDD, system coverage or time division duplex, TDD, system coverage, and
wherein the mobile terminal capability information identifies the one of FDD system coverage or TDD system coverage consistent with the indication provided by the inquiry message.

In accordance with a third aspect of the present disclosure, there is provided computer software adapted to perform a method of providing mobile terminal capability reporting, the method including, at a mobile terminal:
receiving an inquiry message for mobile terminal capability information in advance of a handover from a first network operating in accordance with one type of radio access technology to a second network operating in accordance with a different type of radio access technology, wherein the inquiry message includes an indication as to one of a plurality of mobile terminal capability groups that is utilized by the second network;
identifying, based upon one or more predefined criteria, one of a plurality of mobile terminal capability groups supported by the mobile terminal to be utilized following the handover to the second network; and
causing the mobile terminal capability information to be provided responsive to the inquiry message including the one of the plurality of capability groups that has been identified,
wherein the indication provided by the inquiry message identifies whether the second network has frequency division duplex, FDD, system coverage or time division duplex, TDD, system coverage, and
wherein the mobile terminal capability information identifies the one of FDD system coverage or TDD system coverage consistent with the indication provided by the inquiry message.

In accordance with a fourth aspect of the present disclosure, there is provided a method of providing mobile terminal capability reporting, the method including, at an access point:
causing an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receiving mobile terminal capability information from the mobile terminal including an indication of the one of the plurality of mobile terminal capability groups consistent with the indication provided by the inquiry message, the one of the plurality of mobile terminal capability groups being supported by the mobile terminal,
wherein the indication provided by the inquiry message identifies whether the second network has frequency division duplex, FDD, system coverage or time division duplex, TDD, system coverage, and
wherein the indication included within the mobile terminal capability information identifies the one of FDD system coverage or TDD system coverage consistent with the indication provided by the inquiry message.

In accordance with a fifth aspect of the present disclosure, there is provided apparatus for use in providing mobile terminal capability reporting, the apparatus including a processing system adapted to cause the apparatus to at least, at an access point:
cause an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receive mobile terminal capability information from the mobile terminal including an indication of the one of the plurality of mobile terminal capability groups consistent with the indication provided by the inquiry message, the one of the plurality of mobile terminal capability groups being supported by the mobile terminal,
wherein the indication provided by the inquiry message identifies whether the second network has frequency division duplex, FDD, system coverage or time division duplex, TDD, system coverage, and
wherein the indication included within the mobile terminal capability information identifies the one of FDD system coverage or TDD system coverage consistent with the indication provided by the inquiry message.

In accordance with a sixth aspect of the present disclosure, there is provided computer software adapted to perform a method of providing mobile terminal capability reporting, the method including:
causing an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receiving mobile terminal capability information from the mobile terminal including an indication of the one of the plurality of mobile terminal capability groups consistent with the indication provided by the inquiry message, the one of the plurality of mobile terminal capability groups being supported by the mobile terminal,
wherein the indication provided by the inquiry message identifies whether the second network has frequency division duplex, FDD, system coverage or time division duplex, TDD, system coverage, and
wherein the indication included within the mobile terminal capability information identifies the one of FDD system coverage or TDD system coverage consistent with the indication provided by the inquiry message.

In accordance with embodiments of the present disclosure, there is provided a computer program product including a non-transitory computer-readable storage medium having computer readable instructions stored thereon, the computer readable instructions being executable by a computerized device to cause the computerized device to perform a method of providing capability reporting according to the first aspect of the present disclosure.

In accordance with embodiments of the present disclosure, there is provided a computer program product including a non-transitory computer-readable storage medium having computer readable instructions stored thereon, the computer readable instructions being executable by a computerized device to cause the computerized device to perform a method of providing capability reporting according to the fourth aspect of the present disclosure.

Further features and advantages of embodiments will become apparent from the following description of preferred embodiments, given by way of example only, which is made with reference to the accompanying drawings.

### Brief Description of the Drawings

Figure 1 illustrates an example system and connections involved in the transfer between cells having different radio access technologies according to an embodiment of the present disclosure;
Figure 2 is a block diagram of an apparatus that may be specifically configured in accordance to an embodiment of the present disclosure;
Figure 3 is a flow chart illustrating the operations performed by an apparatus embodied as a mobile terminal in accordance with an embodiment of the present disclosure; and
Figure 4 is a flow chart illustrating the operations performed by an apparatus embodied as an access point in accordance with an embodiment of the present disclosure.

### Detailed Description

The present disclosure now will be described more fully hereinafter with reference to the accompanying drawings, in which some, but not all embodiments are shown. Indeed, embodiments may be embodied in many different forms and should not be construed as limited to the embodiments set forth herein. Like numbers refer to like elements throughout.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a processing system and/or combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processing system or processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in server, a cellular network device, or other network device.

A method, apparatus, computer software and computer program product are provided according to one embodiment of the present disclosure in order to identify one of a plurality of capability groups, such as one of an FDD capability or a TDD capability, that will be utilized following a handover. The capability information may then be provided, such as to the destination network, with the capability information including the capability group that has been identified, thereby permitting the handover to proceed smoothly and the destination network to service the mobile terminal in an efficient manner.

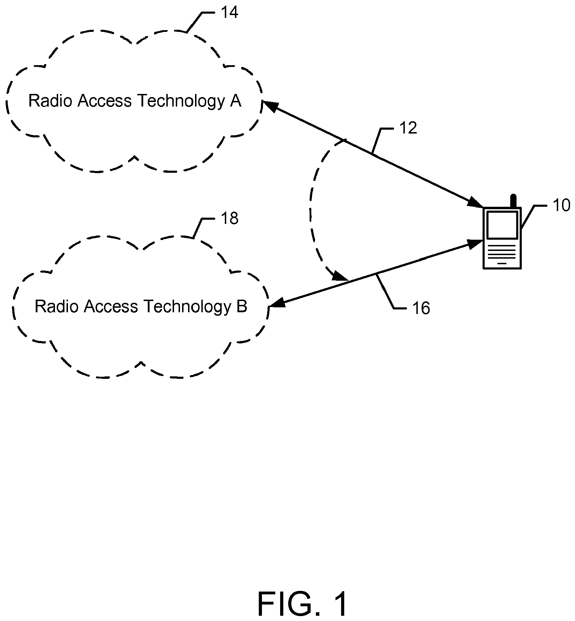

Figure 1 illustrates an example of such a transition between cells that are configured to use different radio access technologies. In this regard, a mobile terminal 10 is transitioning from a connection 12 to cell 14 that uses radio access technology A to a connection 16 to cell 18 that uses radio access technology B. The transition may occur because the mobile terminal is physically moving out of the geographical area that is covered by cell 14 and into a geographical area that is covered by cell 18. When the mobile terminal transfers from one cell to another, the handover that is performed may be referred to a cell selection or cell reselection. According to various embodiments, the transition may be referred to as an inter-radio access technology (inter-RAT) transfer. In one example, an inter-RAT transfer may involve a transfer from a long term evolution (LTE) network to a universal mobile telecommunications system (UMTS) terrestrial radio access (UTRA) network (UTRAN).

Various types of mobile terminals 10 may be employed including, for example, mobile communication devices such as, for example, mobile telephones, personal digital assistants (PDAs), pagers, computers, such as laptop computers and tablet computers, data cards, dongles, e.g., universal serial bus (USB) dongles, or any of numerous other hand held or portable communication devices, computation devices, content generation devices, content consumption devices, or combinations thereof. In its communication with the cells 14, 18, the mobile terminal may communicate with and the cells may each include an access point, such as a base station, a Node B, an evolved Node B (eNB), a relay node, a radio network controller (RNC) or other type of access point. For example, in an embodiment in which the mobile terminal is handed over from an LTE network to a UTRAN, the LTE network may include an eNB and the UTRAN may include a RNC for communication with the mobile terminal.

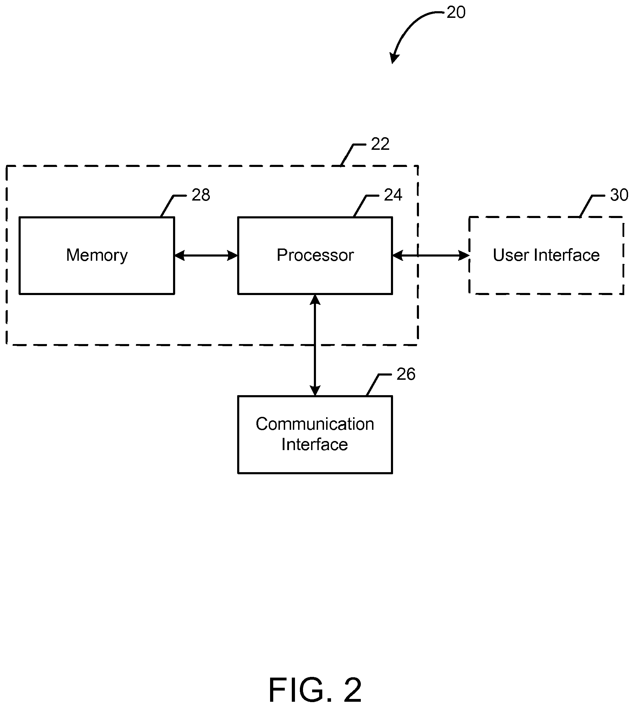

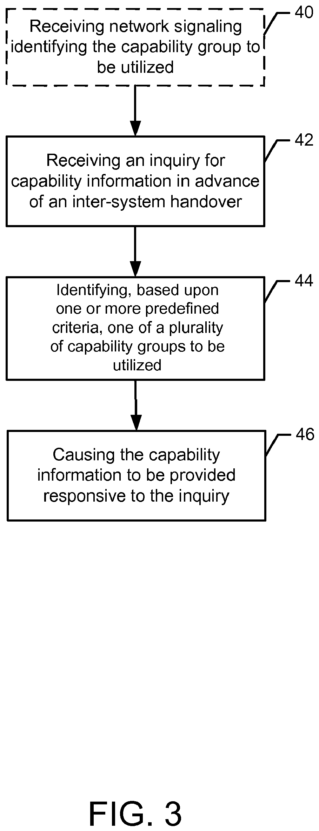

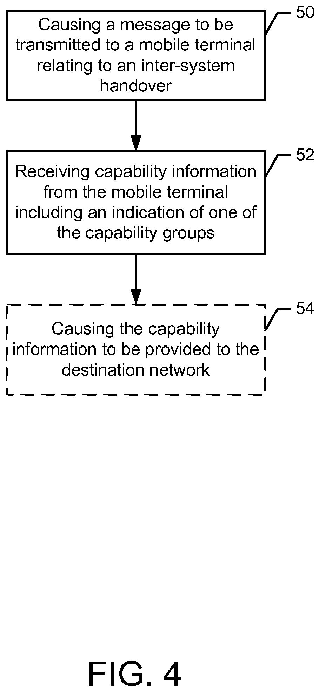

The mobile terminal 10 and the access points may each embody or otherwise be associated with an apparatus 20 that is generally depicted in Figure 2 and that may be configured to perform various operations in accordance with embodiments of the present disclosure as described below, such as in conjunction with Figure 3 from the perspective of the mobile terminal and Figure 4 from the perspective of the access point. However, it should be noted that the components, devices or elements described below may not be mandatory and thus some may be omitted in certain embodiments. Additionally, some embodiments may include further or different components, devices or elements beyond those shown and described herein.

As shown in Figure 2, the apparatus 20 may include or otherwise be in communication with a processing system including, for example, processing circuitry 22 that is configurable to perform actions in accordance with embodiments described herein. The processing circuitry may be configured to perform data processing, application execution and/or other processing and management services according to embodiments of the present disclosure. In some embodiments, the apparatus or the processing circuitry may be embodied as a chip or chip set. In other words, the apparatus or the processing circuitry may include one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus or the processing circuitry may therefore, in some cases, be configured to implement an embodiment of the present disclosure on a single chip or as a single "system on a chip." As such, in some cases, a chip or chipset may constitute means for performing one or more operations for providing the functionalities described herein.

In an embodiment, the processing circuitry 22 may include a processor 24 and memory 28 that may be in communication with or otherwise control a communication interface 26 and, in some cases in which the apparatus is embodied by the mobile terminal 10, a user interface 30. As such, the processing circuitry may be embodied as a circuit chip (e.g., an integrated circuit chip) configured (e.g., with hardware, software or a combination of hardware and software) to perform operations described herein.

The user interface 30 (if implemented in embodiments of the apparatus 20 embodied by the mobile terminal 10) may be in communication with the processing circuitry 22 to receive an indication of a user input at the user interface and/or to provide an audible, visual, mechanical or other output to the user. As such, the user interface may include, for example, a keyboard, a mouse, a joystick, a display, a touch screen, a microphone, a speaker, and/or other input/output mechanisms. In one embodiment, the user interface includes user interface circuitry configured to facilitate at least some functions of the mobile terminal by receiving user input and providing output via, for example, a display, a touch screen or the like.

The communication interface 26 may include one or more interface mechanisms for enabling communication with other devices and/or networks. In some cases, the communication interface may be any means such as a device or circuitry embodied in either hardware, or a combination of hardware and software that is configured to receive and/or transmit data from/to a network and/or any other device or module in communication with the processing circuitry 22, such as between the mobile terminal 10 and an access point. In this regard, the communication interface may include, for example, an antenna (or multiple antennas) and supporting hardware and/or software for enabling communications with a wireless communication network and/or a communication modem or other hardware/software for supporting communication via cable, digital subscriber line (DSL), USB, Ethernet or other methods.

In an embodiment, the memory 28 may include one or more non-transitory memory devices such as, for example, volatile and/or non-volatile memory that may be either fixed or removable. The memory may be configured to store information, data, applications, instructions or the like for enabling the apparatus 20 to carry out various functions in accordance with embodiments of the present disclosure. For example, the memory could be configured to buffer input data for processing by the processor 24. Additionally or alternatively, the memory could be configured to store instructions for execution by the processor. As yet another alternative, the memory may include one of a plurality of databases that may store a variety of files, contents or data sets. Among the contents of the memory, applications may be stored for execution by the processor in order to carry out the functionality associated with each respective application. In some cases, the memory may be in communication with the processor via a bus for passing information among components of the apparatus.

The processor 24 may be embodied in a number of different ways. For example, the processor may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), a DSP (digital signal processor) or the like. In an embodiment, the processor may be configured to execute instructions stored in the memory 28 or otherwise accessible to the processor. As such, whether configured by hardware or by a combination of hardware and software, the processor may represent an entity (e.g., physically embodied in circuitry - in the form of processing circuitry) capable of performing operations according to embodiments of the present disclosure while configured accordingly. Thus, for example, when the processor is embodied as an ASIC, an FPGA, a DSP or the like, the processor may be specifically configured hardware for conducting the operations described herein. Alternatively, as another example, when the processor is embodied as an executor of software instructions, the instructions may specifically configure the processor to perform the operations described herein.

Referring now to Figure 3, the operations performed by a method, apparatus, computer software and computer program product of an embodiment are illustrated from the perspective of an apparatus 20 that may be embodied by or otherwise associated with the mobile terminal 10. In this regard, the apparatus embodied by a mobile terminal may include means, such as the processing circuitry 22, the processor 24, the communication interface 26 or the like, for receiving an inquiry for capability information in advance of an inter-system handover. See operation 42 of Figure 3. The inter-system handover is from a first network, such as a source network, currently supporting the mobile terminal and operating in accordance with a first type of radio access technology to a second network, such as a destination network, that will support the mobile terminal following the handover and that is operating in accordance with a different type of radio access technology. While the first and second networks may operate in accordance with a variety of different radio access technologies, the first network of one embodiment may be an LTE system, while the second network may be a UMTS system. Although the apparatus embodied by the mobile terminal may be configured to receive various types of inquiries for capability information in advance of an inter-system handover, the apparatus, such as the processing circuitry, the processor, the communication interface or the like, may be configured to receive a user equipment (UE) capability inquiry message in one embodiment.

The apparatus 20 embodied by the mobile terminal 10 of one embodiment also includes means, such as the processing circuitry 22, the processor 24 or the like, for identifying, based upon one or more predefined criteria, one of a plurality of capability groups to be utilized. See operation 44 of Figure 3. For example, the plurality of capability groups may include an FDD and a TDD capability such that the apparatus, such as the processing circuitry, the processor or the like, is configured to identify one of the FDD capability or the TDD capability to be utilized following the inter-system handover based upon the one or more predefined criteria.

The method, apparatus, computer software and computer program product of an embodiment in the present disclosure may utilize various predefined criteria in order to determine whether an FDD or TDD capability will be utilized following the inter-system handover. In one embodiment, a predefined criterion relates to the current home public land mobile network (PLMN). In this embodiment, the apparatus 20 embodied by the mobile terminal 10 may include means, such as the processing circuitry 22, the processor 24 or the like, for determining one of the FDD or TDD capability to be utilized following the handover based upon the current home PLMN. In this regard, the determination of the FDD or TDD capability based upon the current home PLMN may include whether the current home PLMN has FDD system coverage or TDD system coverage. In an instance in which the current home PLMN has FDD system coverage, the apparatus, such as the processing circuitry, the processor or the like, may identify the FDD capability to be utilized following the handover. Conversely, in an instance in which the current home PLMN has TDD system coverage, the apparatus, such as the processing circuitry, the processor or the like, may identify the TDD capability to be utilized following the handover. By identifying the FDD or TDD capability based upon the FDD or TDD system coverage of the current home PLMN, the method, apparatus, computer software and computer program product of embodiments may identify the particular type of capability that will be utilized following the handover based upon the capability of the network that will support the mobile terminal following the handover.

In another embodiment, a predefined criterion according to which the FDD or TDD capability is identified is the signal frequency of the second network which may, in turn, be associated with either an FDD capability or a TDD capability. In this embodiment, the frequency that is measured in the second network may be determined to be associated with either an FDD capability or a TDD capability as certain frequencies are predefined to be associated with an FDD capability and other frequencies are predefined to be associated with a TDD capability. Based upon the measured frequency of the second network and the TDD or FDD capability associated therewith, the apparatus 20, such as the processing circuitry 22, the processor 24 or the like, may identify either the FDD capability or the TDD capability to be utilized following the handover. In one embodiment, the measured frequency of the second network may be the signal frequency included in a neighbor cell list for a cell of the second network. In this embodiment, the apparatus, such as the processing circuitry, the processor or the like, may determine whether the signal frequency included in the neighbor cell list is associated with an FDD capability or a TDD capability and may, in turn, identify the FDD capability or the TDD capabilities to be utilized following the handover based upon the FDD or TDD capability associated with the signal frequency included in the neighbor cell list. The signal frequency on the neighbor cell list may be signaled, for example, via system information or via a MeasConfig information element, which is present, e.g., in RRCConnectionReconfiguration message.

In yet another embodiment, a predefined criterion according to which the capability group is identified is provided by network signaling. In this regard, the apparatus 20 embodied by the mobile terminal 10 may include means, such as the processing circuitry 22, the processor 24, the communication interface 26 or the like, for receiving network signaling identifying the capability group to be utilized, such as following the inter-system handover. See operation 40 of Figure 3. By way of example, the network signaling may indicate one of an FDD capability or a TDD capability of the second network that will be utilized by the mobile terminal following the inter-system handover.

As shown in operation 46 of Figure 3, the apparatus 20 may also include means, such as the processing circuitry 22, the processor 24, the communication interface 26 or the like, for causing the capability information to be provided responsive to the inquiry with the capability information including the respective one of the capability groups that has been identified. In one example, the capability information this is provided may identify the respective one of the FDD capability or the TDD capability of the second network that is to be utilized following the inter-system handover.

As described above, an apparatus 20 embodied by a mobile terminal 10 may identify and then provide capability information in advance of an inter-system handover. As such, the inter-system handover may be performed and the second network may begin to service the mobile terminal following the handover in an efficient fashion.

From the perspective of an access point of the first network that is currently servicing the mobile terminal 10, such as an eNB in an embodiment in which the first network is an LTE network, the apparatus 20 embodied by the access point includes means, such as a processing circuitry 22, the processor 24, the communication interface 26 or the like, for causing a message to be transmitted to the mobile terminal 10 relating to the inter-system handover from the first network that is configured to operate in accordance with one type of radio access technology, such as an LTE network, to a second network that is configured to operate in accordance with a different type of radio access technology, such as a UMTS network. See operation 50 of Figure 4. Although the access point may provide various types of messages to the mobile terminal relating to the inter-system handover, the apparatus embodied by the access point of one embodiment may provide a UE capability inquiry message.

As shown in operation 52 of Figure 4, the apparatus 20 embodied by the access point of the first network may also include means, such as a processing circuitry 22, the processor 24, the communication interface 26 or the like, for receiving capability information from the mobile terminal 10 including an indication of one of the capability groups of the mobile terminal that will be utilized, such as following the inter-system handover. For example, the indication of one of the capability groups may be an indication of whether the FDD capability or the TDD capability of the mobile terminal will be utilized following the handover. As shown in operation 54 of Figure 4, the apparatus embodied by the access point of the first network may also include means, such as the processing circuitry, the processor, the communication interface or the like, for causing the capability information that is received from the mobile terminal to be provided to the second network, such as an access point of the second network, that will service the mobile terminal following the inter-system handover. In one embodiment in which the second network is a UMTS network, the capability information may be provided to an RNC of the UMTS network. As indicated above, the capability information that is provided to the second network may indicate whether the FDD capability or the TDD capability of the mobile terminal will be utilized following the inter-system handover. As such, the handover may be efficiently affected since the second network that will service the mobile terminal following the handover has been informed in advance of the capability information, e.g., the FDD or TDD capability, of the mobile terminal that will be utilized following the handover, thereby permitting the second network and its communications with the mobile terminal to be appropriately configured.

As described above, the mobile terminal 10 may identify one of the capability groups, such as either its FDD capability or TDD capability, based upon various types of predefined criteria. In one embodiment, however, the message that is transmitted from the access point of the first network to the mobile terminal relating to the inter-system handover may include an indication as to the one of a plurality of capability groups that is utilized by the second network. For example, the message may include an indication as to whether the second network has FDD system coverage or TDD system coverage. As described in this embodiment, the mobile terminal may, in turn, identify the respective one of the capability groups based upon the network signaling, that is, based upon the indication provided by the message from the access point as to the respective one of the capability groups that is utilized by the second network. As such, the apparatus embodied by the access point may then receive capability information from the mobile terminal including an indication by of the respective one of the capability groups, e.g., a respective one of the FDD or TDD capabilities, to be utilized following that inter-system handover that is consistent with the indication providing by the message originally transmitted by the access point to mobile terminal.

The message may be transmitted from the access point to the mobile terminal 10 in various manners. In one embodiment, an inquiry, such as a UE capability inquiry message, for the handover is transmitted to the mobile terminal. In this embodiment, the inquiry may include an information element that includes the indication as to the respective one of the capability groups that is utilized by the second network, such as an indication as to whether the second network has FDD system coverage or TDD system coverage.

As noted above, Figures 3 and 4 are flowcharts illustrating the operations performed by a method, apparatus, computer software and computer program product, such as apparatus 20 of Figure 2, from the perspective of the mobile terminal 10 and an access point, respectively, in accordance with one embodiment of the present disclosure. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 28 of an apparatus employing an embodiment of the present disclosure and executed by a processor 24 of the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowchart blocks. These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks. As such, the operations of Figures 3 and 4, when executed, convert a computer or processing circuitry into a particular machine configured to perform embodiments of the present disclosure. Accordingly, the operations of Figures 3 and 4 define an algorithm for configuring a computer or processing circuitry, e.g., processor, to perform embodiments. In some cases, a general purpose computer may be provided with an instance of the processor which performs the algorithm of Figures 3 and 4 to transform the general purpose computer into a particular machine configured to perform embodiments.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Moreover, in some embodiments additional optional operations may also be included as shown, for example by the dashed lines in Figures 3 and 4. It should be appreciated that each of the modifications, optional additions or amplifications may be included with the operations above either alone or in combination with any others among the features described herein.

Embodiments described above relate to identification of capability types that will be utilized following a handover. Further embodiments relate to identification of capability types that will be utilized in advance of a handover or during a handover. Still further embodiments relate to identification of capability types that will be utilized in advance of a handover and/or during a handover and/or following a handover; which of these applies in a given situation will depend on when a handover is considered as being completed; however, it should be understood that embodiments may apply to any of pre-handover, during handover and post-handover. For example, the overall procedure for enabling a handover may include a network preparation phase (which uses capabilities to construct the handover message(s)), a phase involving switch of RATs, and then a phase involving establishment on a new RAT (for example also using the capabilities); embodiments can be employed to identify capability types that will be utilized during any of these phases.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of providing mobile terminal capability reporting, the method comprising, at a mobile terminal:
receiving (42) an inquiry message for mobile terminal capability information in advance of a handover from a first network operating in accordance with one type of radio access technology to a second network operating in accordance with a different type of radio access technology, wherein the inquiry message includes an indication as to one of a plurality of mobile terminal capability groups that is utilized by the second network;
identifying (44), based upon one or more predefined criteria, one of a plurality of mobile terminal capability groups supported by said mobile terminal to be utilized following the handover to said second network; and
causing (46) the mobile terminal capability information to be provided responsive to the inquiry message including the one of the plurality of capability groups that has been identified,
**characterized in that**
the indication provided by the inquiry message identifies whether the second network has frequency division duplex, FDD, system coverage or time division duplex, TDD, system coverage, and
the mobile terminal capability information identifies the one of FDD system coverage or TDD system coverage consistent with the indication provided by the inquiry message.

2. A method according to claim 1, wherein the plurality of capability groups of said mobile terminal includes a frequency division duplex, FDD, capability of said mobile terminal and a time division duplex, TDD, capability of said mobile terminal, and
wherein identifying one of a plurality of capability groups of said mobile terminal comprises identifying one of the FDD capability of said mobile terminal or the TDD capability of said mobile terminal to be utilized following the handover based upon the one or more predefined criteria.

3. A method according to claim 2, wherein identifying one of the FDD or TDD capability of said mobile terminal comprises determining one of the FDD or TDD capability of said mobile terminal based upon a current home public land mobile network, PLMN.

4. A method according to claim 3, wherein determining one of the FDD or TDD capability of said mobile terminal based upon a current home PLMN comprises determining whether the current home PLMN has FDD system coverage or TDD system coverage.

5. A method according to claim 2, wherein identifying one of the FDD or TDD capability of said mobile terminal comprises determining one of the FDD or TDD capability of said mobile terminal based upon a signal frequency of the second network being associated with one of the FDD or TDD capability of said mobile terminal.

6. A method according to claim 5, wherein determining one of the FDD or TDD capability of said mobile terminal based upon the signal frequency of the second network comprises determining whether the signal frequency included in a neighbor cell list is associated with one of the FDD or TDD capability of said mobile terminal.

7. A method according to claim 1, comprising receiving, from said first network, network signaling identifying the capability group to be utilized,
wherein identifying one of the plurality of capability groups of said mobile terminal comprises determining one of the capability groups of said mobile terminal based upon the network signaling.

8. Apparatus for use in providing mobile terminal capability reporting, the apparatus comprising a processing system adapted to cause the apparatus to at least, at a mobile terminal:
receive (42) an inquiry message for mobile terminal capability information in advance of a handover from a first network operating in accordance with one type of radio access technology to a second network operating in accordance with a different type of radio access technology, wherein the message includes an indication as to one of a plurality of mobile terminal capability groups that is utilized by the second network;
identify (44), based upon one or more predefined criteria, one of a plurality of mobile terminal capability groups supported by said mobile terminal to be utilized following the handover to said second network; and
cause (46) the mobile terminal capability information to be provided responsive to the inquiry message including the one of the plurality of capability groups that has been identified,
charcterized in that
the indication provided by the inquiry message identifies whether the second network has frequency division duplex, FDD, system coverage or time division duplex, TDD, system coverage, and
the mobile terminal capability information identifies the one of FDD system coverage or TDD system coverage consistent with the indication provided by the inquiry message.

9. A computer program product comprising a set of instructions which, when executed by a computerised device, is configured to perform a method of providing mobile terminal capability reporting, the method comprising, at a mobile terminal:
receiving (42) an inquiry message for mobile terminal capability information in advance of a handover from a first network operating in accordance with one type of radio access technology to a second network operating in accordance with a different type of radio access technology, wherein the message includes an indication as to one of a plurality of mobile terminal capability groups that is utilized by the second network;
identifying (44), based upon one or more predefined criteria, one of a plurality of mobile terminal capability groups supported by said mobile terminal to be utilized following the handover to said second network; and
causing (46) the mobile terminal capability information to be provided responsive to the inquiry message including the one of the plurality of capability groups that has been identified,
**characterized in that**
the indication provided by the inquiry message identifies whether the second network has frequency division duplex, FDD, system coverage or time division duplex, TDD, system coverage, and
the mobile terminal capability information identifies the one of FDD system coverage or TDD system coverage consistent with the indication provided by the inquiry message.

10. A method of providing mobile terminal capability reporting, the method comprising, at an access point:
causing (50) an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receiving (52) mobile terminal capability information from the mobile terminal including an indication of the one of the plurality of mobile terminal capability groups consistent with the indication provided by the inquiry message, said one of the plurality of mobile terminal capability groups being supported by said mobile terminal,
**characterized in that**
the indication provided by the inquiry message identifies whether the second network has frequency division duplex, FDD, system coverage or time division duplex, TDD, system coverage, and
the indication included within the mobile terminal capability information identifies the one of FDD system coverage or TDD system coverage consistent with the indication provided by the inquiry message.

11. A method according to claim 10, comprising causing the mobile terminal capability information to be provided to the second network.

12. A method according to claim 10 or 11, wherein causing the message to be transmitted comprises causing an inquiry for the mobile terminal capability information to be transmitted to the mobile terminal, and
wherein the inquiry includes an information element including the indication as to the one of the plurality of mobile terminal capability groups that is utilized by the second network.

13. Apparatus for use in providing mobile terminal capability reporting, the apparatus comprising a processing system adapted to cause the apparatus to at least, at an access point:
cause (50) an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receive (52) mobile terminal capability information from the mobile terminal including an indication of the one of the plurality of mobile terminal capability groups consistent with the indication provided by the inquiry message, said one of the plurality of mobile terminal capability groups being supported by said mobile terminal,
**characterized in that**
the indication provided by the inquiry message identifies whether the second network has frequency division duplex, FDD, system coverage or time division duplex, TDD, system coverage, and
the indication included within the mobile terminal capability information identifies the one of FDD system coverage or TDD system coverage consistent with the indication provided by the inquiry message.

14. A computer program product comprising a set of instructions which, when executed by a computerised device, is configured to perform a method of providing mobile terminal capability reporting, the method comprising, at an access point:
causing (50) an inquiry message to be transmitted to a mobile terminal relating to a handover from a first network operating in accordance with one type of radio access technology to a second network operating in accordance with a different type of radio access technology, wherein the inquiry message includes an indication as to one of a plurality of mobile terminal capability groups that is utilized by the second network; and
receiving (52) mobile terminal capability information from the mobile terminal including an indication of the one of the plurality of mobile terminal capability groups consistent with the indication provided by the inquiry message, said one of the plurality of mobile terminal capability groups being supported by said mobile terminal,
**characterized in that**
the indication provided by the inquiry message identifies whether the second network has frequency division duplex, FDD, system coverage or time division duplex, TDD, system coverage, and
the indication included within the mobile terminal capability information identifies the one of FDD system coverage or TDD system coverage consistent with the indication provided by the inquiry message.

## Patentansprüche

1. Verfahren zum Bereitstellen eines Berichts über die Leistungsfähigkeit eines mobilen Endgeräts, wobei das Verfahren umfasst, an einem mobilen Endgerät:
Empfangen (42) einer Anfragenachricht hinsichtlich Informationen über die Leistungsfähigkeit des mobilen Endgeräts vor einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, wobei die Anfragenachricht eine Angabe hinsichtlich einer einer Vielzahl von Leistungsfähigkeitsgruppen des mobilen Endgeräts enthält, die von dem zweiten Netzwerk verwendet wird;
basierend auf einem oder mehreren vordefinierten Kriterien, Identifizieren (44) einer einer Vielzahl von Leistungsfähigkeitsgruppen des mobilen Endgeräts, die von dem mobilen Endgerät unterstützt werden, um nach der Übergabe an das zweite Netzwerk verwendet zu werden; und
Veranlassen (46), dass die Leistungsfähigkeitsinformationen des mobilen Endgeräts im Ansprechen auf die Anfragenachricht bereitgestellt werden, einschließlich der einen der Vielzahl von Leistungsfähigkeitsgruppen, die identifiziert worden ist,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die Leistungsfähigkeitsinformationen des mobilen Endgeräts den einen des FDD-Systemumfangs oder des TDD-Systemumfangs in Übereinstimmung mit der von der Anfragenachricht bereitgestellten Angabe identifizieren.

2. Verfahren nach Anspruch 1, wobei die Vielzahl von Leistungsfähigkeitsgruppen des mobilen Endgeräts eine Frequenzduplex- bzw. Frequency Division Duplex, FDD, -Leistungsfähigkeit des mobilen Endgeräts und eine Zeitduplex- bzw. Time Division Duplex, TDD, -Leistungsfähigkeit des mobilen Endgeräts aufweisen; und
wobei das Identifizieren einer einer Vielzahl von Leistungsfähigkeitsgruppen des mobilen Endgeräts das Identifizieren eines der FDD-Leistungsfähigkeit des mobilen Endgeräts oder der TDD-Leistungsfähigkeit des mobilen Endgeräts umfasst, um nach der Übergabe verwendet zu werden, basierend auf dem einen oder den mehreren vordefinierten Kriterien.

3. Verfahren nach Anspruch 2, wobei das Identifizieren eines der FDD- oder der TDD-Leistungsfähigkeit des mobilen Endgeräts das Bestimmen eines der FDD- oder der TDD-Leistungsfähigkeit des mobilen Endgeräts basierend auf einem aktuellen öffentlichen terrestrischen Heimat-Mobilfunknetz umfasst.

4. Verfahren nach Anspruch 3, wobei das Bestimmen eines der FDD- oder der TDD-Leistungsfähigkeit des mobilen Endgeräts basierend auf einem aktuellen öffentlichen terrestrischen Heimat-Mobilfunknetz das Ermitteln umfasst, ob das aktuelle öffentliche terrestrische Heimat-Mobilfunknetz FDD-Systemumfang oder TDD-Systemumfang hat.

5. Verfahren nach Anspruch 2, wobei das Identifizieren eines der FDD- oder der TDD-Leistungsfähigkeit des mobilen Endgeräts das Bestimmen eines der FDD- oder der TDD-Leistungsfähigkeit des mobilen Endgeräts basierend auf einer Signalfrequenz des zweiten Netzwerks hat, die zu einem der FDD- oder der TDD-Leistungsfähigkeit des mobilen Endgeräts gehört.

6. Verfahren nach Anspruch 5, wobei das Bestimmen eines der FDD- oder der TDD-Leistungsfähigkeit des mobilen Endgeräts basierend auf der Signalfrequenz des zweiten Netzwerks das Ermitteln umfasst, ob die in einer Nachbarzellenliste enthaltene Signalfrequenz zu einem der FDD- oder der TDD-Leistungsfähigkeit des mobilen Endgeräts gehört.

7. Verfahren nach Anspruch 1, das das Empfangen, von dem ersten Netzwerk, von Netzwerksignalisierung umfasst, die die zu verwendende Leistungsfähigkeitsgruppe identifiziert,
wobei das Identifizieren einer der Vielzahl von Leistungsfähigkeitsgruppen des mobilen Endgeräts das Bestimmen einer der Leistungsfähigkeitsgruppen des mobilen Endgeräts basierend auf der Netzwerksignalisierung umfasst.

8. Vorrichtung zur Verwendung beim Bereitstellen eines Berichts über die Leistungsfähigkeit eines mobilen Endgeräts, wobei die Vorrichtung ein Verarbeitungssystem aufweist, das dazu ausgelegt ist, die Vorrichtung, an einem mobilen Endgerät, wenigstens zu veranlassen zum:
Empfangen (42) einer Anfragenachricht hinsichtlich Informationen über die Leistungsfähigkeit des mobilen Endgeräts vor einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, wobei die Nachricht eine Angabe hinsichtlich einer einer Vielzahl von Leistungsfähigkeitsgruppen des mobilen Endgeräts enthält, die von dem zweiten Netzwerk verwendet wird;
basierend auf einem oder mehreren vordefinierten Kriterien, Identifizieren (44) einer einer Vielzahl von Leistungsfähigkeitsgruppen des mobilen Endgeräts, die von dem mobilen Endgerät unterstützt werden, um nach der Übergabe an das zweite Netzwerk verwendet zu werden; und Veranlassen (46), dass die Leistungsfähigkeitsinformationen des mobilen Endgeräts im Ansprechen auf die Anfragenachricht bereitgestellt werden, einschließlich der einen der Vielzahl von Leistungsfähigkeitsgruppen, die identifiziert worden ist,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die Leistungsfähigkeitsinformationen des mobilen Endgeräts den einen des FDD-Systemumfangs oder des TDD-Systemumfangs in Übereinstimmung mit der von der Anfragenachricht bereitgestellten Angabe identifizieren.

9. Computerprogrammerzeugnis, das einen Befehlssatz aufweist, der, wenn er von einer Rechnervorrichtung ausgeführt wird, dazu konfiguriert ist, ein Verfahren zum Bereitstellen eines Berichts über die Leistungsfähigkeit eines mobilen Endgeräts durchzuführen, wobei das Verfahren umfasst, an einem mobilen Endgerät:
Empfangen (42) einer Anfragenachricht hinsichtlich Informationen über die Leistungsfähigkeit des mobilen Endgeräts vor einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, wobei die Nachricht eine Angabe hinsichtlich einer einer Vielzahl von Leistungsfähigkeitsgruppen des mobilen Endgeräts enthält, die von dem zweiten Netzwerk verwendet wird;
basierend auf einem oder mehreren vordefinierten Kriterien, Identifizieren (44) einer einer Vielzahl von Leistungsfähigkeitsgruppen des mobilen Endgeräts, die von dem mobilen Endgerät unterstützt werden, um nach der Übergabe an das zweite Netzwerk verwendet zu werden; und
Veranlassen (46), dass die Leistungsfähigkeitsinformationen des mobilen Endgeräts im Ansprechen auf die Anfragenachricht bereitgestellt werden, einschließlich der einen der Vielzahl von Leistungsfähigkeitsgruppen, die identifiziert worden ist,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die Leistungsfähigkeitsinformationen des mobilen Endgeräts den einen des FDD-Systemumfangs oder des TDD-Systemumfangs in Übereinstimmung mit der von der Anfragenachricht bereitgestellten Angabe identifizieren.

10. Verfahren zum Bereitstellen eines Berichts über die Leistungsfähigkeit eines mobilen Endgeräts, wobei das Verfahren umfasst, an einem Zugangspunkt:
Veranlassen (50), dass eine Anfragenachricht hinsichtlich einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, an ein mobiles Endgerät gesendet wird, wobei die Anfragenachricht eine Angabe hinsichtlich einer einer Vielzahl von Leistungsfähigkeitsgruppen des mobilen Endgeräts enthält, die von dem zweiten Netzwerk verwendet wird;
Empfangen (52) von Leistungsfähigkeitsinformationen des mobilen Endgeräts von dem mobilen Endgerät, die eine Angabe der einen der Vielzahl von Leistungsfähigkeitsgruppen des mobilen Endgeräts enthalten,
die mit der Angabe , die von der Anfragenachricht bereitgestellt wird, übereinstimmt, wobei die eine der Vielzahl von Leistungsfähigkeitsgruppen des mobilen Endgeräts von dem mobilen Endgerät unterstützt wird,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die in den Leistungsfähigkeitsinformationen des mobilen Endgeräts enthaltene Angabe den einen des FDD-Systemumfangs oder des TDD-Systemumfangs in Übereinstimmung mit der von der Anfragenachricht bereitgestellten Angabe identifiziert.

11. Verfahren nach Anspruch 10, das das Veranlassen umfasst, dass die Leistungsfähigkeitsinformationen des mobilen Endgeräts an das zweite Netzwerk geliefert werden.

12. Verfahren nach Anspruch 10 oder 11, wobei das Veranlassen, dass die Nachricht gesendet wird, das Veranlassen umfasst, dass eine Anfrage hinsichtlich der Leistungsfähigkeitsinformationen des mobilen Geräts an das mobile Gerät gesendet wird, und
wobei die Anfrage ein Informationselement aufweist, das die Angabe hinsichtlich der einen der Vielzahl von Leistungsfähigkeitsgruppen des mobilen Geräts enthält, die von dem zweiten Netzwerk verwendet wird.

13. Vorrichtung zur Verwendung beim Bereitstellen eines Berichts über die Leistungsfähigkeit eines mobilen Endgeräts, wobei die Vorrichtung ein Verarbeitungssystem aufweist, das dazu ausgelegt ist, die Vorrichtung, an einem Zugangspunkt, wenigstens zu veranlassen zum:
Veranlassen (50), dass eine Anfragenachricht hinsichtlich einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, an ein mobiles Endgerät gesendet wird, wobei die Anfragenachricht eine Angabe hinsichtlich einer einer Vielzahl von Leistungsfähigkeitsgruppen des mobilen Endgeräts enthält, die von dem zweiten Netzwerk verwendet wird;
Empfangen (52) von Leistungsfähigkeitsinformationen des mobilen Endgeräts von dem mobilen Endgerät, die eine Angabe der einen der Vielzahl von Leistungsfähigkeitsgruppen des mobilen Endgeräts enthalten, die mit der Angabe , die von der Anfragenachricht bereitgestellt wird, übereinstimmt, wobei die eine der Vielzahl von Leistungsfähigkeitsgruppen des mobilen Endgeräts von dem mobilen Endgerät unterstützt wird,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die in den Leistungsfähigkeitsinformationen des mobilen Endgeräts enthaltene Angabe den einen des FDD-Systemumfangs oder des TDD-Systemumfangs in Übereinstimmung mit der von der Anfragenachricht bereitgestellten Angabe identifiziert.

14. Computerprogrammerzeugnis, das einen Befehlssatz aufweist, der, wenn er von einer Rechnervorrichtung ausgeführt wird, dazu konfiguriert ist, ein Verfahren zum Bereitstellen eines Berichts über die Leistungsfähigkeit eines mobilen Endgeräts durchzuführen, wobei das Verfahren umfasst, an einem Zugangspunkt:
Veranlassen (50), dass eine Anfragenachricht hinsichtlich einer Übergabe von einem ersten Netzwerk, das gemäß einem Typ von Funkzugangstechnik arbeitet, an ein zweites Netzwerk, das gemäß einem anderen Typ von Funkzugangstechnik arbeitet, an ein mobiles Endgerät gesendet wird, wobei die Anfragenachricht eine Angabe hinsichtlich einer einer Vielzahl von Leistungsfähigkeitsgruppen des mobilen Endgeräts enthält, die von dem zweiten Netzwerk verwendet wird;
Empfangen (52) von Leistungsfähigkeitsinformationen des mobilen Endgeräts von dem mobilen Endgerät, die eine Angabe der einen der Vielzahl von Leistungsfähigkeitsgruppen des mobilen Endgeräts enthalten,
die mit der Angabe , die von der Anfragenachricht bereitgestellt wird, übereinstimmt, wobei die eine der Vielzahl von Leistungsfähigkeitsgruppen des mobilen Endgeräts von dem mobilen Endgerät unterstützt wird,
**dadurch gekennzeichnet, dass**
die von der Anfragenachricht bereitgestellte Angabe identifiziert, ob das zweite Netzwerk Frequenzduplex- bzw. Frequency Division Duplex, FDD, -Systemumfang oder Zeitduplex- bzw. Time Division Duplex, TDD, -Systemumfang hat, und
die in den Leistungsfähigkeitsinformationen des mobilen Endgeräts enthaltene Angabe den einen des FDD-Systemumfangs oder des TDD-Systemumfangs in Übereinstimmung mit der von der Anfragenachricht bereitgestellten Angabe identifiziert.

## Revendications

1. Procédé de fourniture de rapport de capacité de terminal mobile, le procédé comprenant, au niveau d'un terminal mobile, les étapes consistant à :
recevoir (42) un message d'interrogation concernant des informations de capacité de terminal mobile à l'avance d'un transfert intercellulaire en provenance d'un premier réseau fonctionnant en fonction d'un type de technologie d'accès radio vers un second réseau fonctionnant en fonction d'un type différent de technologie d'accès radio, dans lequel le message d'interrogation comprend une indication concernant l'un d'une pluralité de groupes de capacité de terminal mobile qui est utilisé par le second réseau ;
identifier (44), sur la base d'un ou de plusieurs critères prédéfinis, l'un d'une pluralité de groupes de capacité de terminal mobile pris en charge par ledit terminal mobile à utiliser suite au transfert intercellulaire vers ledit second réseau ; et
amener (46) les informations de capacité de terminal mobile à être fournies en réponse au message d'interrogation comprenant l'un de la pluralité de groupes de capacité qui a été identifié,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
les informations de capacité de terminal mobile identifient l'une d'une couverture de système FDD ou d'une couverture de système TDD conforme à l'indication fournie par le message d'interrogation.

2. Procédé selon la revendication 1, dans lequel la pluralité de groupes de capacité dudit terminal mobile comprend une capacité de duplexage par répartition en fréquence, FDD, dudit terminal mobile et une capacité de duplexage par répartition dans le temps, TDD, dudit terminal mobile, et
dans lequel identifier l'un d'une pluralité de groupes de capacité dudit terminale mobile consiste à identifier l'une de la capacité FDD dudit terminal mobile ou de la capacité TDD dudit terminal mobile à utiliser suite au transfert intercellulaire sur la base de l'un ou des plusieurs critères prédéfinis.

3. Procédé selon la revendication 2, dans lequel identifier l'une de la capacité FDD ou TDD dudit terminal mobile consiste à déterminer l'une de la capacité FDD ou TDD dudit terminal mobile sur la base d'un réseau mobile terrestre public domestique, PLMN, actuel.

4. Procédé selon la revendication 3, dans lequel déterminer l'une de la capacité FDD ou TDD dudit terminal mobile sur la base d'un PLMN domestique actuel consiste à déterminer si le PLMN domestique actuel présente une couverture de système FDD ou une couverture de système TDD.

5. Procédé selon la revendication 2, dans lequel identifier l'une de la capacité FDD ou TDD dudit terminal mobile consiste à déterminer l'une de la capacité FDD ou TDD dudit terminal mobile sur la base d'une fréquence de signal du second réseau qui est associé à l'une de la capacité FDD ou TDD dudit terminal mobile.

6. Procédé selon la revendication 5, dans lequel déterminer l'une de la capacité FDD ou TDD dudit terminal mobile sur la base de la fréquence de signal du second réseau consiste à déterminer si la fréquence de signal comprise dans une liste de cellules voisines est associée à l'une de la capacité FDD ou TDD dudit terminal mobile.

7. Procédé selon la revendication 1, consistant à recevoir, en provenance dudit premier réseau, une signalisation de réseau qui identifie le groupe de capacité à utiliser,
dans lequel identifier l'une de la pluralité de groupes de capacité dudit terminale mobile consiste à déterminer l'un des groupes de capacité dudit terminal mobile sur la base de la signalisation de réseau.

8. Appareil destiné à une utilisation dans la fourniture d'un rapport de capacité de terminal mobile, l'appareil comprenant un système de traitement adapté pour amener l'appareil, au niveau d'un terminal mobile, au moins à :
recevoir (42) un message d'interrogation concernant des informations de capacité de terminal mobile à l'avance d'un transfert intercellulaire en provenance d'un premier réseau fonctionnant en fonction d'un type de technologie d'accès radio vers un second réseau fonctionnant en fonction d'un type différent de technologie d'accès radio, dans lequel le message comprend une indication concernant l'un d'une pluralité de groupes de capacité de terminal mobile qui est utilisé par le second réseau ;
identifier (44), sur la base d'un ou de plusieurs critères prédéfinis, l'un d'une pluralité de groupes de capacité de terminal mobile pris en charge par ledit terminal mobile à utiliser suite au transfert intercellulaire vers ledit second réseau ; et
amener (46) les informations de capacité de terminal mobile à être fournies en réponse au message d'interrogation comprenant l'un de la pluralité de groupes de capacité qui a été identifié,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
les informations de capacité du terminal mobile identifient l'une d'une couverture de système FDD ou d'une couverture de système TDD conforme à l'indication fournie par le message d'interrogation.

9. Produit de programme informatique comprenant un ensemble d'instructions qui, lorsqu'elles sont exécutées par un dispositif informatique, est configuré pour exécuter un procédé de fourniture d'un rapport de capacité de terminal mobile, le procédé comprenant, au niveau d'un terminal mobile, les étapes consistant à :
recevoir (42) un message d'interrogation concernant des informations de capacité de terminal mobile à l'avance d'un transfert intercellulaire en provenance d'un premier réseau fonctionnant en fonction d'un type de technologie d'accès radio vers un second réseau fonctionnant en fonction d'un type différent de technologie d'accès radio, dans lequel le message comprend une indication concernant l'un d'une pluralité de groupes de capacité de terminal mobile qui est utilisé par le second réseau ;
identifier (44), sur la base d'un ou de plusieurs critères prédéfinis, l'un d'une pluralité de groupes de capacité de terminal mobile pris en charge par ledit terminal mobile à utiliser suite au transfert intercellulaire vers ledit second réseau ; et
amener (46) les informations de capacité de terminal mobile à être fournies en réponse au message d'interrogation comprenant l'un de la pluralité de groupes de capacité qui a été identifié,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
les informations de capacité du terminal mobile identifient l'une d'une couverture de système FDD ou d'une couverture de système TDD conforme à l'indication fournie par le message d'interrogation.

10. Procédé de fourniture d'un rapport de capacité de terminal mobile, le procédé comprenant, au niveau d'un point d'accès, les étapes consistant à :
amener (50) un message d'interrogation à transmettre à un terminal mobile concernant un transfert intercellulaire provenant d'un premier réseau fonctionnant en fonction d'un type de technologie d'accès radio vers un second réseau fonctionnant en fonction d'un type différent de technologie d'accès radio, dans lequel le message d'interrogation comprend une indication concernant l'un d'une pluralité de groupes de capacité de terminal mobile qui est utilisée par le second réseau ; et
recevoir (52) des informations de capacité de terminal mobile provenant du terminal mobile comprenant une indication de l'un de la pluralité de groupes de capacité de terminal mobile conforme à l'indication fournie par le message d'interrogation, ledit un de la pluralité de groupes de capacité de terminal mobile étant pris en charge par ledit terminal mobile,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
l'indication comprise dans les informations de capacité de terminal mobile identifie l'une d'une couverture de système FDD ou d'une couverture de système TDD conforme à l'indication fournie par le message d'interrogation.

11. Procédé selon la revendication 10, consistant à amener les informations de capacité de terminal mobile à être fournies au second réseau.

12. Procédé selon la revendication 10 ou 11, dans lequel amener le message à transmettre consiste à amener une interrogation concernant les informations de capacité de terminal mobile à être transmise au terminal mobile, et
dans lequel l'interrogation comprend un élément d'information comprenant l'indication concernant l'un de la pluralité de groupes de capacité de terminal mobile qui est utilisé par le second réseau.

13. Appareil destiné à une utilisation dans la fourniture d'un rapport de capacité de terminal mobile, l'appareil comprenant un système de traitement adapté pour amener l'appareil, au niveau d'un point d'accès, au moins à :
amener (50) un message d'interrogation à transmettre à un terminal mobile concernant un transfert intercellulaire provenant d'un premier réseau fonctionnant en fonction d'un type de technologie d'accès radio vers un second réseau fonctionnant en fonction d'un type différent de technologie d'accès radio, dans lequel le message d'interrogation comprend une indication concernant l'un d'une pluralité de groupes de capacité de terminal mobile qui est utilisée par le second réseau ; et
recevoir (52) des informations de capacité de terminal mobile provenant du terminal mobile comprenant une indication de l'un de la pluralité de groupes de capacité de terminal mobile conforme à l'indication fournie par le message d'interrogation, ledit un de la pluralité de groupes de capacité de terminal mobile étant pris en charge par ledit terminal mobile,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
l'indication comprise dans les informations de capacité de terminal mobile identifie l'une d'une couverture de système FDD ou d'une couverture de système TDD conforme à l'indication fournie par le message d'interrogation.

14. Produit de programme informatique comprenant un ensemble d'instructions qui, lorsqu'elles sont exécutées par un dispositif informatique, est configuré pour exécuter un procédé de fourniture d'un rapport de capacité de terminal mobile, le procédé comprenant, au niveau d'un point d'accès, les étapes consistant à :
amener (50) un message d'interrogation à transmettre à un terminal mobile concernant un transfert intercellulaire provenant d'un premier réseau fonctionnant en fonction d'un type de technologie d'accès radio vers un second réseau fonctionnant en fonction d'un type différent de technologie d'accès radio, dans lequel le message d'interrogation comprend une indication concernant l'un d'une pluralité de groupes de capacité de terminal mobile qui est utilisée par le second réseau ; et
recevoir (52) des informations de capacité de terminal mobile provenant du terminal mobile comprenant une indication de l'un de la pluralité de groupes de capacité de terminal mobile conforme à l'indication fournie par le message d'interrogation, ledit un de la pluralité de groupes de capacité de terminal mobile étant pris en charge par ledit terminal mobile,
**caractérisé en ce que**
l'indication fournie par le message d'interrogation identifie si le second réseau possède une couverture de système de duplexage par répartition en fréquence, FDD, ou une couverture de système de duplexage par répartition dans le temps, TDD, et
l'indication comprise dans les informations de capacité de terminal mobile identifie l'une d'une couverture de système FDD ou d'une couverture de système TDD conforme à l'indication fournie par le message d'interrogation.
